# EUROPEAN PATENT APPLICATION

(11) **EP 4 663 344 A1**
(43) Date of publication of application: **17.12.2025**
(21) Application number: 24778830.0
(22) Date of filing: 19.02.2024
(51) Int. Cl.: B23Q 17/00, B23B 31/00, B23Q 3/155, G01B 7/00, G01B 7/14

(54) **MACHINE TOOL WITH AUTOMATIC TOOL CHANGER, AND EDDY CURRENT SENSOR USED FOR SAME**

(30) Priority: 24.03.2023 JP 2023047701
(71) Applicant: Tokyo Seimitsu Co., Ltd., Hachioji-shi, Tokyo 192-8515 (JP)
(72) Inventor: KANAI, Kenjiro, Tsuchiura-shi, Ibaraki 300-0015 (JP); TOGASAKI, Mitsutoshi, Tsuchiura-shi, Ibaraki 300-0015 (JP); TAKEDA, Kazuki, Tsuchiura-shi, Ibaraki 300-0015 (JP)
(74) Representative: Seemann & Partner Patentanwälte mbB
(86) International application number: PCT/JP2024/005678
(87) International publication number: WO 2024/202685

(57) **Abstract**

A machine tool with an automatic tool changer that mounts a tool holder 11 to which a tool 25 is attached on a spindle head 26 and machines a workpiece 24 includes an eddy current sensor 1 disposed such that a measurement end surface 1-4 faces the outer peripheral surface of a flange 11B of the tool holder 11, and a data processor 3 that detects runout of a tool 25-1 mounted on the spindle head 26 based on data obtained by measurement by the eddy current sensor 1. The eddy current sensor 1 includes a coil 1-2 formed in a spiral shape and held in a bobbin 1-3 serving as a cylindrical container, and a core 1-1 serving as a soft magnetic body disposed at the axial center of the coil 1-2 on the measurement end surface 1-4 side. The machine tool can perform a tool change operation at a higher speed without compromising the detection accuracy.

## Description

### Field

The present invention relates to an automatic control machine tool, such as a numerically controlled (NC) machine and a machining center, that machines a workpiece (an object to be machined or an object to be measured) by automatic control. More particularly, the present invention is suitable for a machine tool with an automatic tool changer and an eddy current sensor used for the same including an automatic tool changer (ATC) that appropriately selects and attaches/detaches machining tools and configured to automatically measure the shape or the like of the workpiece in the middle of machining of the object to be machined or when the machining is tentatively completed.

### Background

NC machines and machining centers are devices that automatically select various tools according to a machining process and automatically attach them to a spindle to perform a variety of machining operations. They include a machining table on which a workpiece is placed and fixed, a spindle head that drives a machining mounted tool mounted at the position on a tool spindle passing through the tool spindle to which the tool is attached, and an automatic tool changer (ATC device) that appropriately selects and attaches/detaches the mounted tool to be mounted on the spindle head.

The tools are changed by an automatic tool holder change (ATC) device. The ATC device automatically takes out a tool holder to which a tool is attached from a tool magazine and automatically mounts it on the spindle (tool change operation). The tool is attached to the tool holder having the size, shape, or the like defined by predetermined standards so as to be attached and detached by the ATC device.

To reduce the cost of machined products and the cycle time (time required for one process), it is desirable for the automatic tool changer to perform the tool change operation at a higher speed. Normally, in the tool change operation, the tool is placed in the tool magazine while swinging left and right when it is attached to and detached from the spindle of the machining center. Conventionally, to detect the runout of a tool, an ATC runout detection system is configured by measuring the gap between the tool made of metal and an eddy current sensor when the tool is rotating using the eddy current sensor.

In the ATC runout detection system, the eddy current sensor is known to be fixed to the spindle head with a bracket to detect the distance to the outer peripheral surface of a flange of the tool holder mounted on the spindle head as electrical signals of displacement, and is described in Patent Literature 1.

### Citation List

### Patent Literature

Patent Literature 1: Japanese Patent Application Laid-open No. 2018-89738

### Summary

### Technical Problem

In the conventional technology described above, the eddy current sensor needs to be placed at a position as close as possible to the outer peripheral surface of the flange of the tool holder to enhance the detection accuracy. The runout of the tool increases as the tool change operation is performed at a higher speed. Therefore, it is necessary to increase the gap (distance) between the tool and the eddy current sensor to prevent collision between the eddy current sensor and the tool.

If the eddy current sensor and the tool collide, the eddy current sensor is damaged and fails, resulting in a crack in the outer case of the eddy current sensor and breakage of internal wiring. The conventional eddy current sensor has a short detection distance, whereby it is difficult to enhance the detection accuracy when the gap (distance) between the tool and the eddy current sensor is increased.

An object of the present invention is to address the disadvantages of the conventional technology described above and provide a machine tool with an automatic tool changer and an eddy current sensor used for the same that can perform a tool change operation at a higher speed without compromising the detection accuracy in an ATC runout detection system using the eddy current sensor. Another object is to improve the reliability of the ATC runout detection system using the eddy current sensor.

### Solution to Problem

To achieve the object described above, a machine tool with an automatic tool changer according to the present invention configured to mount a tool holder to which a tool is attached on a spindle head and rotationally drive the spindle head to machine a workpiece includes: an eddy current sensor disposed such that a measurement end surface faces an outer peripheral surface of a flange of the tool holder; and a data processor configured to detect runout of the tool mounted on the spindle head based on data obtained by measurement by the eddy current sensor. The eddy current sensor includes a coil formed in a spiral shape and held in a bobbin serving as a cylindrical container, and a core serving as a soft magnetic body disposed at an axial center of the coil on the measurement end surface side.

In the machine tool with the automatic tool changer described above, a core length that is an axial length of the core is preferably substantially equal to a coil length that is an axial length of the coil.

In the machine tool with the automatic tool changer described above, a core length that is an axial length of the core is preferably extended longer than a coil length that is an axial length of the coil to a side opposite to the measurement end surface.

In the machine tool with the automatic tool changer described above, a diameter of the coil is preferably smaller than a thickness H of the flange.

In the machine tool with the automatic tool changer described above, material of the core is preferably any one of a nickel-based ferrite core, a manganese-based ferrite core, and permalloy.

In the machine tool with the automatic tool changer described above, a ratio of a core length that is an axial length of the core to a coil length that is an axial length of the coil (core length/coil length) is preferably 1.35 to 1.65.

In the machine tool with the automatic tool changer described above, a ratio of a core length that is an axial length of the core to a coil length that is an axial length of the coil (core length/coil length) is preferably 1.40 to 1.60.

In the machine tool with the automatic tool changer described above, a ratio of a core length that is an axial length of the core to a coil length that is an axial length of the coil (core length/coil length) is preferably 1.70 or smaller.

To achieve the object described above, an eddy current sensor according to the present invention used to detect runout of a tool mounted on a spindle head of a machine tool with an automatic tool changer includes a coil formed in a spiral shape and held in a bobbin serving as a cylindrical container, and a core serving as a soft magnetic body disposed at an axial center of the coil on a measurement end surface side. A ratio of a core length that is an axial length of the core to a coil length that is an axial length of the coil (core length/coil length) is 1.35 to 1.65.

### Advantageous Effects of Invention

In a machine tool with an automatic tool changer according to the present invention, an eddy current sensor disposed such that a measurement end surface faces an outer peripheral surface of a flange of a tool holder includes a coil formed in a spiral shape and held in a bobbin serving as a cylindrical container, and a core serving as a soft magnetic body disposed at the axial center of the coil on the measurement end surface side. With this configuration, the detection accuracy is not compromised if the gap (distance) between the eddy current sensor and the tool is increased. Therefore, collision between the eddy current sensor and the tool due to a tool change operation performed at a higher speed can be prevented by increasing the gap (distance) between the eddy current sensor and the tool.

### Brief Description of Drawings

FIG. 1 is a sectional view of a conventional eddy current sensor and an eddy current sensor according to an embodiment of the present invention.
FIG. 2 is a front view of a machining center (machine tool with an automatic tool changer) according to the embodiment of the present invention.
FIG. 3 is a side view of the machining center (machine tool with an automatic tool changer) according to the embodiment of the present invention.
FIG. 4 is a sectional view of the mounted state of a tool holder.
FIG. 5 is a block diagram of an ATC runout detection system.
FIG. 6 is a sectional view of the attached/detached state of the tool holder.
FIG. 7 is a schematic of a state where high-frequency magnetic flux is generated by the eddy current sensor.
FIG. 8 is a schematic of the high-frequency magnetic flux generated by the eddy current sensor visualized by computer simulation.
FIG. 9 is a graph of distance vs. output voltage of the eddy current sensor.
FIG. 10 is a graph indicating the results of analyzing the ratio of core length to coil length vs. sensitivity.

### Description of Embodiments

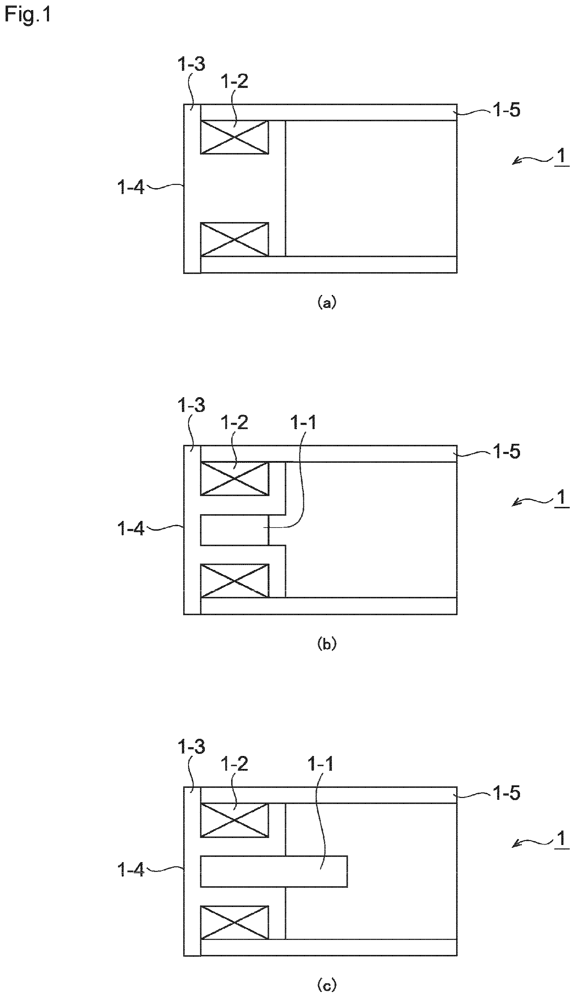

Embodiments according to the present invention are described below in greater detail with reference to the drawings. FIG. 1 is a sectional view of an eddy current sensor 1. (a) illustrates a conventional eddy current sensor 1, (b) illustrates an example provided with a core 1-1, and (c) illustrates an eddy current sensor 1 according to an embodiment of the present invention. The eddy current sensor 1 generates high-frequency magnetic flux by flowing a high-frequency current through an internal coil 1-2.

In an object to be measured (metal) in the high-frequency magnetic flux, the magnetic flux passes, and an eddy current in a perpendicular direction flows on the surface of the object due to electromagnetic induction. A change in the distance between the eddy current sensor 1 and the object to be measured (metal) results in a change in the amount of magnetic flux passing through the coil, thereby changing the impedance of the coil 1-2. The distance is measured as a change in DC voltage by rectifying the amplitude of oscillation due to this change.

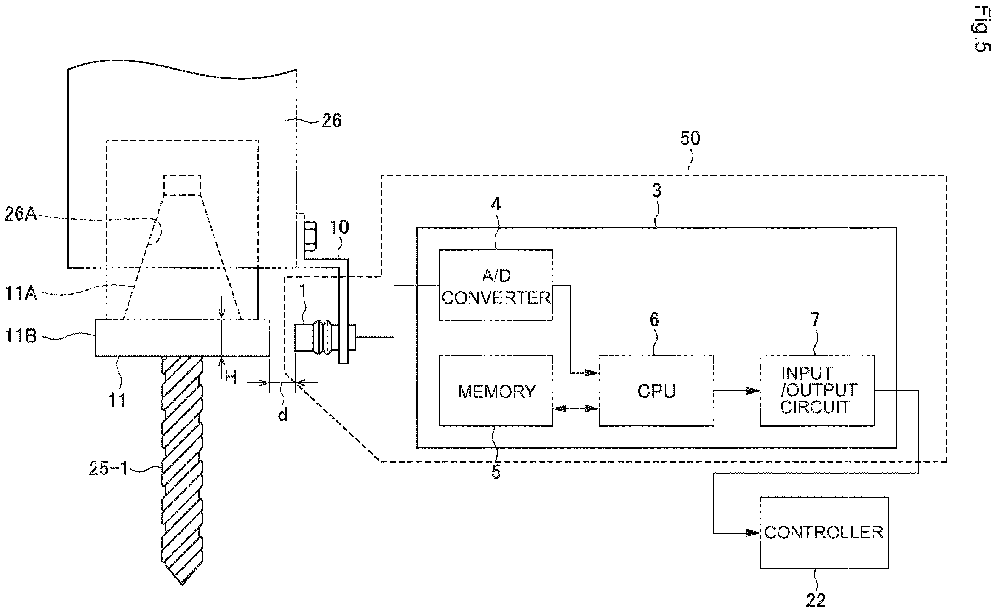

The eddy current sensor 1 is disposed such that a measurement end surface 1-4 faces the outer peripheral surface of a flange 11B (refer to FIG. 5) of a tool holder 11 serving as the object to be measured. The disc-shaped coil 1-2 formed in a spiral shape is held in shape by epoxy or other plastic and held in a bobbin 1-3 serving as a cap-shaped cylindrical container made of resin. The bobbin 1-3 is housed in a cylindrical outer case 1-5. In a typical eddy current sensor 1, the outer diameter of the outer case 1-5 is φ5 mm, and the axial length is approximately 16 mm. The coil length, which is the axial length of the coil 1-2, is approximately 2 mm.

FIG. 1(b) illustrates an example where the core 1-1 is disposed at the axial center of the coil 1-2 on the measurement end surface 1-4 side in the eddy current sensor 1. The core 1-1 is a soft magnetic body made of ferrite or the like the permeability of which does not decrease in a high-frequency region. The core length, which is the axial length of the core 1-1 illustrated in FIG. 1(b), is substantially equal to the coil length, which is the axial length of the coil 1-2. This configuration increases the density of magnetic flux passing through the core 1-1 and increases its directivity, thereby improving the sensitivity compared with the conventional eddy current sensor 1 illustrated in FIG. 1(a). The core 1-1 is disposed so as not to protrude from the end on the measurement end surface 1-4 side of the coil 1-2. In other words, the core 1-1 and the coil 1-2 are disposed flat and with no steps (flush) on the measurement end surface 1-4 side.

FIG. 1(c) illustrates the eddy current sensor 1 according to the embodiment. The core 1-1 is extended in the backward direction opposite to the measurement end surface 1-4, that is, the core length, which is the axial length of the core 1-1, is extended longer than the coil length, which is the axial length of the coil 1-2, to the side opposite to the measurement end surface 1-4. In FIG. 1(c), the ratio of the core length to the coil length (core length/coil length) is approximately 1.50 (150%). This configuration further increases the density of magnetic flux passing through the core 1-1 and increases its directivity, thereby improving the sensitivity compared with the eddy current sensor 1 illustrated in FIG. 1(b).

Therefore, to achieve the same sensitivity, the distance between the eddy current sensor 1 and the object to be measured (metal), that is, the distance d (refer to FIG. 5) between the eddy current sensor 1 and the outer peripheral surface of the flange 11B of the tool holder 11 can be increased. Thus, collision between the eddy current sensor 1 and the tool holder 11 can be prevented by increasing the distance d (refer to FIG. 5).

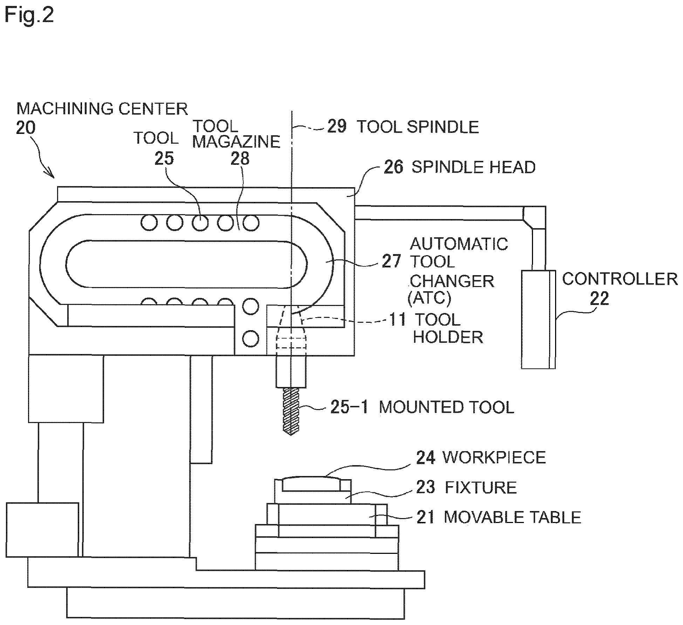

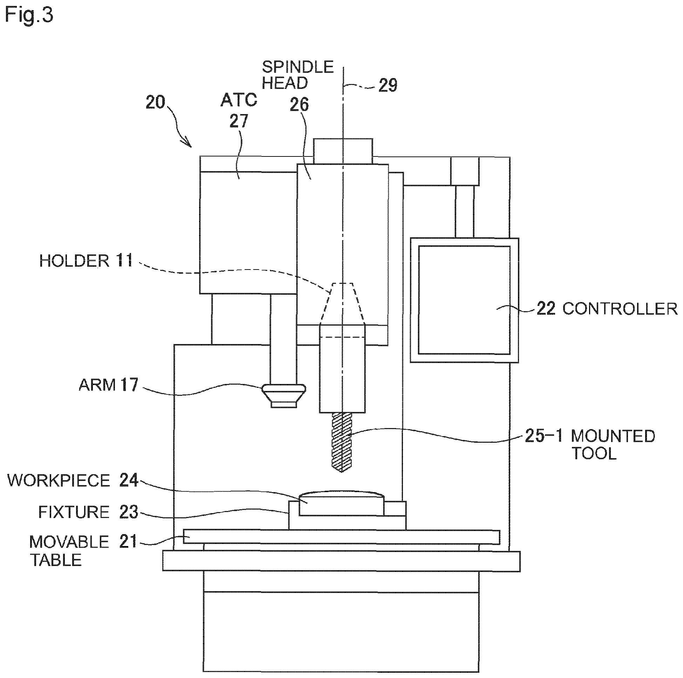

Before explaining the eddy current sensor 1 according to the embodiment in detail, a machining center 20 including an automatic tool changer (ATC device) is described. FIG. 2 is a front view of the machining center 20 according to the embodiment of the present invention, and FIG. 3 is a side view thereof.

In FIGS. 2 and 3, a workpiece (which is an object to be machined during machining and an object to be measured during measurement) 24 is placed on the top surface of a movable table 21 of the machining center 20 and fixed by a fixture 23. A spindle head 26 on which a mounted tool 25-1 is mounted is disposed above the workpiece 24.

The machining center 20 is a numerically controlled machine tool that performs various machining operations, such as milling, drilling, boring, and tapping, without changing the mounting of the workpiece 24. A tool magazine 28 houses a number of tools 25. The machining center 20 automatically changes the tools 25 to perform machining according to computer numerical control commands. Therefore, the environment in which the machining center 20 is installed has oil mist and dust serving as fine particles and dust and chips around the workpiece and the spindle because the machining center 20 is designed mainly for machining.

The spindle head 26 includes a mechanism that feeds the tool 25 in the vertical direction and a mechanism that causes the tool 25 to rotate in the horizontal plane, and a tool spindle 29 is the axis of rotation around which the mounted tool 25-1 rotates. An automatic tool changer (ATC device) 27 attaches the tools 25 individually to the tool holder 11 and automatically attaches and detaches the tool holder 11 to and from the spindle head 26.

The automatic tool changer (ATC device) 27 uses an arm 17 under the control of a controller 22 to take out the mounted tool 25-1 with the tool holder 11 from the tool magazine 28 that houses the tools 25. The automatic tool changer (ATC device) 27 includes a mechanism that attaches and detaches the mounted tool 25-1 to the spindle head 26 and houses it in the tool magazine 28.

The controller 22 executes machining and measurement computer programs stored therein, thereby performing the following series of control relating to machining, such as cutting, and measurement of the shape of the workpiece 24 and machining errors: control of the movement of the movable table 21 in X-axis and Y-axis directions, control of the movement of the spindle head 26 in a Z-axis direction, and control of the replacement of the mounted tool 25-1.

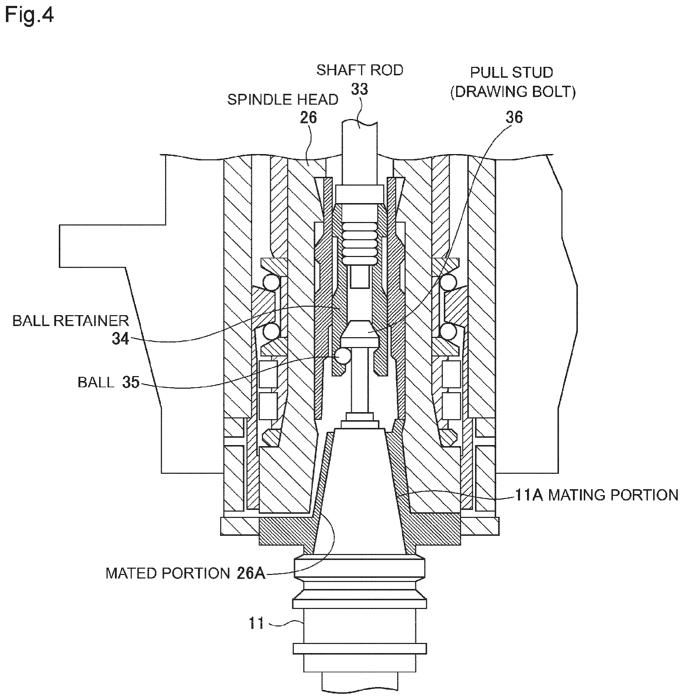

FIG. 4 is a sectional view of the mounted state of the tool holder and illustrates a state where the tool holder 11 is mounted on the spindle head 26. The tool holder 11 has a conical mating portion 11A and is mounted by fitting the mating portion 11A to a conical mated portion 26A formed in the spindle head 26. To mount the tool holder 11, a shaft rod 33 is pulled upward first, and a ball retainer 34 and a ball 35 move.

Next, the movement of the ball 35 pulls a pull stud (drawing bolt) 36, and the conical mating portion 11A of the tool holder 11 is pressed against the conical mated portion 26A of the spindle head 26. As a result, the mating portion 11A comes into contact with and is fitted (chucked) in the mated portion 26A.

FIG. 5 is a block diagram of an ATC runout detection system and illustrates a shape measurement unit 50 that measures the shape of the flange 11B of the tool holder 11 that holds the mounted tool 25-1. The shape measurement unit 50 is a device that automatically detects the mounted state of the tool holder 11 mounted on the spindle head 26 by the ATC device and is mainly composed of the eddy current sensor 1 and a data processor 3. The eddy current sensor 1 is fixed to the spindle head 26 with a bracket 10. The eddy current sensor 1 detects the distance d to the outer peripheral surface of the flange 11B of the tool holder 11 mounted on the spindle head 26 as signal voltage.

Not only the shape of the mating portion 11A of the tool holder 11 but also the outer peripheral shape of the flange 11B is standardized and identified. Therefore, the mounted state of the mounted tool 25-1 can be determined by measuring the outer peripheral shape of the flange 11B. The outer peripheral shape is derived by causing the tool holder 11 to rotate once and measuring the distance d.

The data processor 3 detects the runout indicating the mounted state of the mounted tool 25-1 in the tool holder 11 based on data obtained by measurement by the eddy current sensor 1 and includes an A/D converter 4, a CPU 6, a memory 5, an input/output circuit 7, and other components. The A/D converter 4 converts the signal voltage output from the eddy current sensor 1 into digital signals and outputs them to the CPU 6.

Based on the data converted into the digital signals, the data processor 3 detects the runout indicating the mounted state of the mounted tool 25-1 mounted on the spindle head 26. The calculation of the distance d by the CPU 6 is performed by receiving a command to start measurement from the controller 22 via the input/output circuit 7. The data on the distance d output from the eddy current sensor 1 is stored in the memory 5.

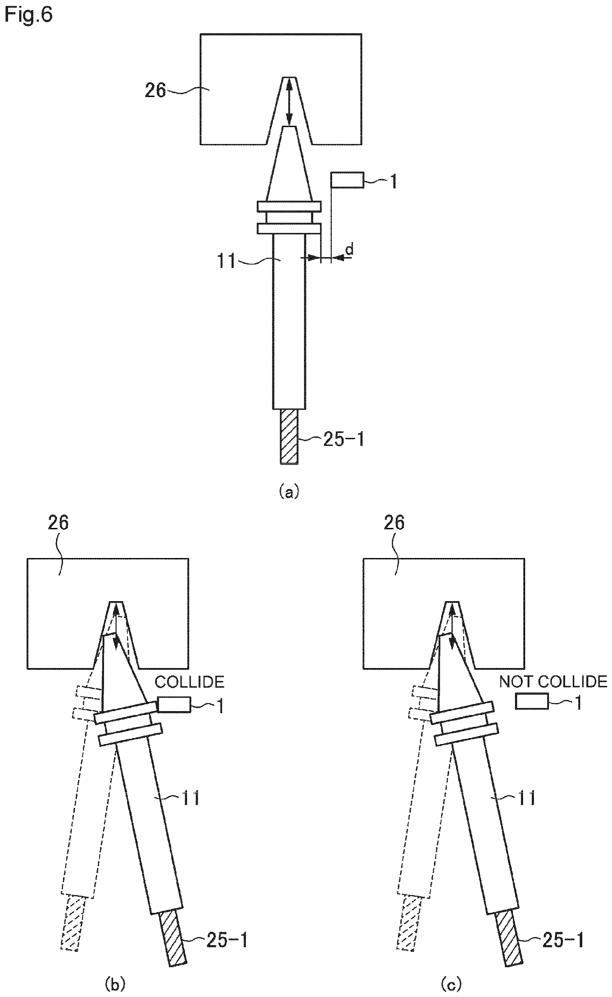

FIG. 6 is a sectional view of the attached/detached state of the tool holder 11 and illustrates a state where the tool holder 11 provided with the mounted tool 25-1 is attached to and detached from the spindle head 26. Normally, as illustrated in FIG. 6(a), the tool holder 11 has no runout and is attached to and detached from the spindle head 26 as indicated by the arrow. However, when the tool holder 11 is attached and detached while tilting and swinging as illustrated in FIG. 6(b), the flange 11B of the tool holder 11 and the eddy current sensor 1 collide.

If the eddy current sensor 1 and the tool holder 11 collide, the eddy current sensor is damaged and fails, resulting in a crack in the outer case of the eddy current sensor and breakage of internal wiring. In contrast to FIG. 6(b), if the distance d to the outer peripheral surface of the flange 11B of the tool holder 11 is increased as illustrated in FIG. 6(c), the collision between the eddy current sensor 1 and the tool holder 11 can be prevented.

By increasing the distance d to the outer peripheral surface of the flange 11B of the tool holder 11, the eddy current sensor 1 can not only detect the mounted state of the mounted tool 25-1 during rotation, such as a state where dust and chips enter between the mating portion 11A and the mated portion 26A and increase the runout, but also determine that the tool holder 11 is out of control when attaching and detaching the tool holder 11.

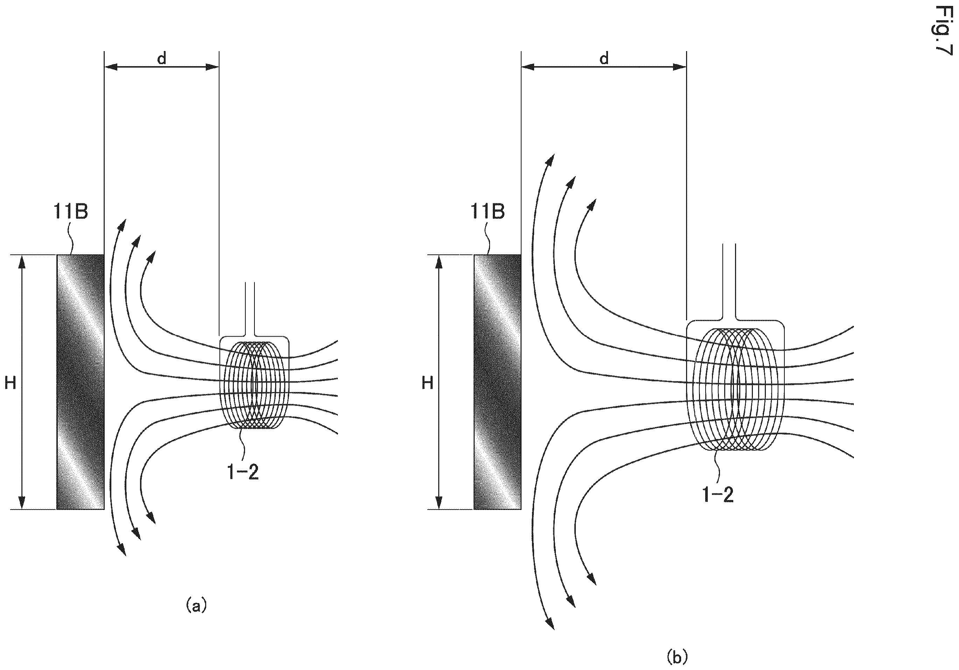

FIG. 7 is a schematic of a state where high-frequency magnetic flux is generated by the eddy current sensor 1. As illustrated in FIG. 7(a), when a high-frequency current is applied to the coil 1-2, high-frequency magnetic flux is generated radially to the flange 11B serving as a target metal. As illustrated in FIG. 7(b), the sensitivity can be enhanced by increasing the diameter of the coil 1-2, whereby the distance d can be increased.

In this case, however, besides being restricted in installation, the eddy current sensor 1 is affected by the surrounding metal because the range of the high-frequency magnetic flux is larger than the thickness H of the flange 11B serving as the object to be measured. Therefore, the diameter of the coil 1-2 is preferably smaller than the thickness H of the flange 11B. While the core 1-1 with a larger diameter is more preferably used, the diameter of the core 1-1 is determined to be equal to or smaller than the inner diameter of the coil 1-2 based on the diameter of the coil 1-2.

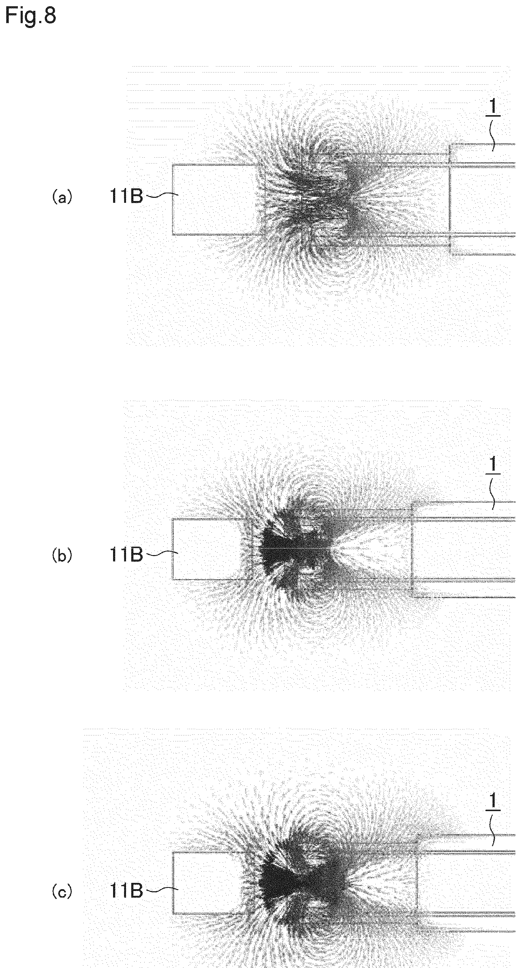

FIG. 8 is a schematic of the high-frequency magnetic flux generated by the eddy current sensor 1 visualized by computer simulation. FIG. 8(a) is a schematic corresponding to FIG. 1(a), that is, a case where the core 1-1 is not provided. FIG. 8(b) is a schematic corresponding to FIG. 1(b), that is, a case where the core 1-1 having substantially the same length as the coil length is provided. FIG. 8(c) is a schematic of the magnetic flux distribution generated when a high-frequency current is applied using the eddy current sensor 1 including the core 1-1 longer than the coil length.

In the conventional eddy current sensor 1 illustrated in FIG. 8(a), the high-frequency magnetic flux spreads radially from the end (measurement end surface 1-4) of the coil 1-2. As a result, the magnetic flux in the center facing the flange 11B is sparse, and the magnetic flux density is low. In FIG. 8(b), the magnetic flux in the center is denser than in FIG. 8(a) (the magnetic flux is concentrated, and the color is darker in the figure), and it is found out that the magnetic flux density is higher.

In FIG. 8(c), the magnetic flux in the center is denser than in FIG. 8(b), and it is found out that the magnetic flux density is much higher. The magnetic flux distribution is more concentrated in the center, and the directivity is increased, thereby improving the sensitivity of the eddy current sensor 1. The material of the core 1-1 is preferably a nickel-based ferrite core, a manganese-based ferrite core, permalloy, or the like to prevent the effects of temperature change.

The sensitivity of the eddy current sensor 1 can be adjusted by changing the material of the core 1-1, and the detection distance of the eddy current sensor 1 can be controlled. The sensitivity needs to be adjusted to prevent the signal voltage from exceeding the allowable input voltage range of the data processor 3 (refer to FIG. 5). In other words, providing the core 1-1 enables appropriately adjusting the sensitivity and the detection distance according to the purpose without increasing the size of the eddy current sensor 1.

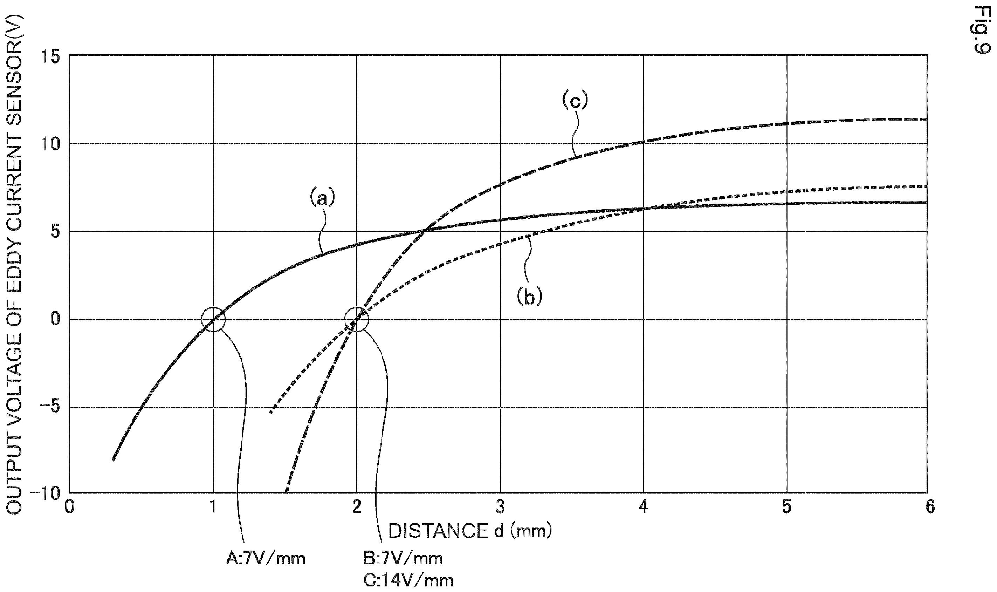

FIG. 9 is a graph of the distance d vs. the output voltage of the eddy current sensor 1. The vertical axis indicates the output voltage (V) of the eddy current sensor 1, and the horizontal axis indicates the distance d from the eddy current sensor 1 to the outer peripheral surface of the flange 11B. FIG. 9(a), FIG. 9(b), and FIG. 9(c) indicate the results of measurement by the eddy current sensor 1 illustrated in FIG. 1(a), FIG. 1(b), and FIG. 1(c), respectively. The inclination of each graph indicates the sensitivity of the eddy current sensor 1. The position where the eddy current sensor 1 is disposed is preferably a point at which the inclination is large to increase the sensitivity.

FIG. 9(a) indicates the eddy current sensor 1 not provided with the core 1-1. When the eddy current sensor 1 was disposed at point A such that the distance d was 1 mm, the sensitivity was 7 V/mm. Similarly, FIG. 9(b) indicates the eddy current sensor 1 provided with the core 1-1 as illustrated in FIG. 1(b). When the eddy current sensor 1 was disposed at point B such that the distance d was 2 mm, the sensitivity was 7 V/mm. Thus, the eddy current sensor 1 provided with the core 1-1 enables increasing the distance d without reducing the sensitivity compared with the case where the core 1-1 is not provided.

FIG. 9(c) indicates the eddy current sensor 1 provided with the core 1-1 extended in the backward direction as illustrated in FIG. 1(c). When the eddy current sensor 1 was disposed at point B such that the distance d was 2 mm, the sensitivity was 14 V/mm. Thus, it is found out that the eddy current sensor 1 with the extended core 1-1 not only enables increasing the distance d compared with the case where the core 1-1 is not provided but also improves the sensitivity. Therefore, the eddy current sensor 1 provided with the extended core 1-1 can not only prevent collision between the eddy current sensor 1 and the tool holder 11 but also increase the directivity and improve the sensitivity without increasing the diameter of the coil 1-2.

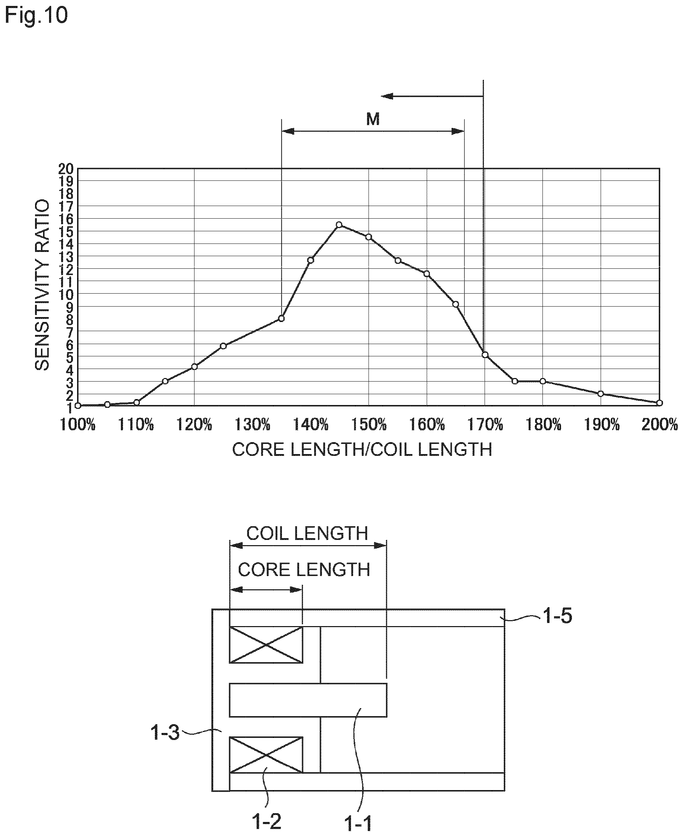

FIG. 10 is a graph indicating the results of analyzing the ratio of the core length to the coil length vs. the sensitivity. The horizontal axis indicates the ratio of the core length to the coil length (core length/coil length, unit: %), and the vertical axis indicates the sensitivity ratio as multiples based on the sensitivity of the conventional eddy current sensor 1. FIG. 10 indicates the results obtained by making the distance d constant.

As illustrated in FIG. 10, the ratio of the core length, which is the axial length of the core 1-1, to the coil length, which is the axial length of the coil 1-2, (core length/coil length) is preferably 135 to 165% (1.35 to 1.65) (range of M in the figure), and more preferably 140 to 160% (1.40 to 1.60) to improve the sensitivity at the position where the distance d is doubled as illustrated in FIG. 9. The ratio of the core length (core length/coil length) is preferably 170% (1.70) or smaller to further improve the sensitivity.

### Reference Signs List

- 1: EDDY CURRENT SENSOR
- 1-1: CORE
- 1-2: COIL
- 1-3: BOBBIN
- 1-4: MEASUREMENT END SURFACE
- 1-5: OUTER CASE
- 3: DATA PROCESSOR
- 4: A/D CONVERTER
- 5: MEMORY
- 6: CPU
- 7: INPUT/OUTPUT CIRCUIT
- 10: BRACKET
- 11: TOOL HOLDER
- 11A: MATING PORTION
- 11B: FLANGE
- 17: ARM
- 20: MACHINING CENTER
- 21: MOVABLE TABLE
- 22: CONTROLLER
- 23: FIXTURE
- 24: WORKPIECE
- 25: TOOL
- 25-1: MOUNTED TOOL
- 26: SPINDLE HEAD
- 26A: MATED PORTION
- 28: TOOL MAGAZINE
- 29: TOOL SPINDLE
- 33: SHAFT ROD
- 34: BALL RETAINER
- 35: BALL
- 50: SHAPE MEASUREMENT UNIT

## Claims

1. A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side.

2. The machine tool with the automatic tool changer according to claim 1, wherein a core length that is an axial length of the core is substantially equal to a coil length that is an axial length of the coil.

3. The machine tool with the automatic tool changer according to claim 1, wherein a core length that is an axial length of the core is extended longer than a coil length that is an axial length of the coil to a side opposite to the measurement end surface.

4. The machine tool with the automatic tool changer according to claim 1, wherein a diameter of the coil is smaller than a thickness H of the flange.

5. The machine tool with the automatic tool changer according to claim 1, wherein material of the core is any one of a nickel-based ferrite core, a manganese-based ferrite core, and permalloy.

6. The machine tool with the automatic tool changer according to any one of claims 1, 3, 4, and 5, wherein a ratio of a core length that is an axial length of the core to a coil length that is an axial length of the coil (core length/coil length) is 1.35 to 1.65.

7. The machine tool with the automatic tool changer according to any one of claims 1, 3, 4, and 5, wherein a ratio of a core length that is an axial length of the core to a coil length that is an axial length of the coil (core length/coil length) is 1.40 to 1.60.

8. The machine tool with the automatic tool changer according to any one of claims 1, 3, 4, or 5, wherein a ratio of a core length that is an axial length of the core to a coil length that is an axial length of the coil (core length/coil length) is 1.70 or smaller.

9. An eddy current sensor used to detect runout of a tool mounted on a spindle head of a machine tool with an automatic tool changer, the eddy current sensor comprising:
a coil formed in a spiral shape and held in a bobbin serving as a cylindrical container; and
a core serving as a soft magnetic body disposed at an axial center of the coil on a measurement end surface side, wherein
a ratio of a core length that is an axial length of the core to a coil length that is an axial length of the coil (core length/coil length) is 1.35 to 1.65.

## Amended claims

### Amended claims under Art. 19.1 PCT

1. A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side, and
a ratio of a core length that is an axial length of the core to a coil length that is an axial length of the coil (core length/coil length) is 1.35 to 1.65.

2. A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side, and
a ratio of a core length that is an axial length of the core to a coil length that is an axial length of the coil (core length/coil length) is 1.40 to 1.60.

3. A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side, and
a ratio of a core length that is an axial length of the core to a coil length that is an axial length of the coil (core length/coil length) is 1.70 or smaller.

4. An eddy current sensor used to detect runout of a tool mounted on a spindle head of a machine tool with an automatic tool changer, the eddy current sensor comprising:
a coil formed in a spiral shape and held in a bobbin serving as a cylindrical container; and
a core serving as a soft magnetic body disposed at an axial center of the coil on a measurement end surface side, wherein
a ratio of a core length that is an axial length of the core to a coil length that is an axial length of the coil (core length/coil length) is 1.35 to 1.65.

5. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
a core length that is an axial length of the core is extended longer than a coil length that is an axial length of the coil to a side opposite to the measurement end surface, and
a ratio of the core length that is the axial length of the core to the coil length that is the axial length of the coil (core length/coil length) is 1.35 to 1.65.

6. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
a diameter of the coil is smaller than a thickness H of the flange, and
a ratio of a core length that is an axial length of the core to a coil length that is an axial length of the coil (core length/coil length) is 1.35 to 1.65.

7. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
material of the core is any one of a nickel-based ferrite core, a manganese-based ferrite core, and permalloy, and
a ratio of a core length that is an axial length of the core to a coil length that is an axial length of the coil (core length/coil length) is 1.35 to 1.65.

8. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
a core length that is an axial length of the core is extended longer than a coil length that is an axial length of the coil to a side opposite to the measurement end surface, and
a ratio of the core length that is the axial length of the core to the coil length that is the axial length of the coil (core length/coil length) is 1.40 to 1.60.

9. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
a diameter of the coil is smaller than a thickness H of the flange, and
a ratio of a core length that is an axial length of the core to a coil length that is an axial length of the coil (core length/coil length) is 1.40 to 1.60.

10. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
material of the core is any one of a nickel-based ferrite core, a manganese-based ferrite core, and permalloy, and
a ratio of a core length that is an axial length of the core to a coil length that is an axial length of the coil (core length/coil length) is 1.40 to 1.60.

11. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
a core length that is an axial length of the core is extended longer than a coil length that is an axial length of the coil to a side opposite to the measurement end surface, and
a ratio of the core length that is the axial length of the core to the coil length that is the axial length of the coil (core length/coil length) is 1.70 or smaller.

12. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
a diameter of the coil is smaller than a thickness H of the flange, and
a ratio of a core length that is an axial length of the core to a coil length that is an axial length of the coil (core length/coil length) is 1.70 or smaller.

13. [Added] A machine tool with an automatic tool changer configured to mount a tool holder to which a tool is attached on a spindle head and rotationally drive the spindle head to machine a workpiece, the machine tool with the automatic tool changer comprising:
an eddy current sensor disposed such that a measurement end surface faces an outer peripheral surface of a flange of the tool holder; and
a data processor configured to detect runout of the tool mounted on the spindle head based on data obtained by measurement by the eddy current sensor, wherein
the eddy current sensor comprises:
a coil formed in a spiral shape and held in a bobbin serving as a cylindrical container; and
a core serving as a soft magnetic body disposed at an axial center of the coil on the measurement end surface side,
material of the core is any one of a nickel-based ferrite core, a manganese-based ferrite core, and permalloy, and
a ratio of a core length that is an axial length of the core to a coil length that is an axial length of the coil (core length/coil length) is 1.70 or smaller.
Statement under Article 19(1)
Claims 6 to 18 in the replacement document include all inventions in any of claims 6 to 9 in the international application that were deemed to have novelty, inventive step, and industrial applicability in the written opinion of the International Searching Authority. Thus, they have novelty, inventive step, and industrial applicability.
